# EUROPEAN PATENT APPLICATION

(11) **EP 4 723 746 A1**
(43) Date of publication of application: **08.04.2026**
(21) Application number: 25205582.7
(22) Date of filing: 30.09.2025
(51) Int. Cl.: H04W 48/18, H04W 8/12, H04W 12/06

(54) **SYSTEMS, METHODS, AND DEVICES FOR INDIRECT NETWORK SHARING**

(30) Priority: 04.10.2024 US 202463703697 P; 26.09.2025 US 202519342391
(71) Applicant: Apple Inc., Cupertino, CA 95014 (US)
(72) Inventor: GUPTA, Vivek G., Cupertino, CA, 95014 (US); HU, Haijing, Cupertino, CA, 95014 (US)
(74) Representative: Lang, Johannes

(57) **Abstract**

Described herein are solutions for indirect network sharing. A user equipment (UE) can receive public land mobile network (PLMN) identifiers (IDs) corresponding to a hosting operator network and one or more participating operator networks. The UE can select a PLMN ID of a participating operator network and communicate with the hosting operator network to perform one or more procedures based on the PLMN ID of the participating operator network. Examples of such procedures can include an authentication procedure, registration procedure, a protocol data unit (PDU) session establishment procedure and subsequent data transfer to external networks. An access and mobility management function (AMF) of the hosting operator network acts as the serving AMF and can select one or more functions in the hosting operator network and the participating operator network to complete the procedures.

## Description

### CROSS-REFERENCE TO RELATED APPLICATIONS

This application claims the benefit of U.S. Provisional Application No. 63/703,697, filed October 4, 2024, and U.S. Patent Application No. 19/342,391, filed September 26, 2025, the contents of which are herein incorporated by reference in their entireties for all purposes.

### FIELD

This disclosure relates to wireless communication networks and mobile device capabilities.

### BACKGROUND

Wireless communication networks and wireless communication services are becoming increasingly dynamic, complex, and ubiquitous. For example, some wireless communication networks can be developed to implement fifth generation (5G) or new radio (NR) technology, sixth generation (6G) technology, and so on. Such technology can include solutions for enabling user equipment (UE) and network devices, such as base stations and satellites, to communicate with one another.

### BRIEF DESCRIPTION OF THE DRAWINGS

The present disclosure will be readily understood and enabled by the detailed description and accompanying figures of the drawings. Like reference numerals can designate like features and structural elements. Figures and corresponding descriptions are provided as non-limiting examples of aspects, implementations, etc., of the present disclosure, and references to "an" or "one" aspect, implementation, etc., may not necessarily refer to the same aspect, implementation, etc., and can mean at least one, one or more, etc.
Fig. 1 is a diagram of an example overview of one or more of the techniques described herein.
Fig. 2 is a diagram of an example network according to one or more implementations described herein.
Fig. 3 is a diagram of an example network architecture according to one or more implementations described herein.
Fig. 4 is a diagram of an example of a hosting operator network and a participating operator network according to one or more implementations described herein.
Fig. 5 is a diagram of an example process for indirect network according to one or more implementations described herein.
Fig. 6 is a diagram of an example of a session management function (SMF) interface between a hosting operator network and a participating operator network according to one or more implementations described herein.
Fig. 7 is a diagram of an example of a network slice selection function (Nssf) interface between a hosting operator network and a participating operator network according to one or more implementations described herein.
Fig. 8 is a diagram of an example process for indirect network according to one or more implementations described herein.
Fig. 9 is a diagram of an example of components of a device according to one or more implementations described herein.
Fig. 10 is a diagram of example interfaces of baseband circuitry according to one or more implementations described herein.
Fig. 11 is a block diagram illustrating components, according to one or more implementations described herein, able to read instructions from a machine-readable or computer-readable medium (e.g., a non-transitory machine-readable storage medium) and perform any one or more of the methodologies discussed herein.
Fig. 12 is a diagram of an example process for indirect network according to one or more implementations described herein.

### DETAILED DESCRIPTION

The following detailed description refers to the accompanying drawings. Like reference numbers in different drawings can identify the same or similar features, elements, operations, etc. Additionally, the present disclosure is not limited to the following description as other implementations can be utilized, and structural or logical changes made, without departing from the scope of the present disclosure.

Wireless communication networks can include user equipment (UE) capable of communicating with base stations and/or other network access devices. The base stations can provide a UE with access to a core network (CN) and additional external networks, such as the Internet. Wireless communication networks can implement various techniques and standards that enable wireless communications. An example of these techniques can include allocating time and frequency resources to enable UEs and base stations to communicate with one another.

A wireless communications network can be managed and operated by an operator. The wireless communications network can include UEs connected to base stations or other radio access network (RAN) devices, which are in turn connected to a CN. The wireless communications network can implemented one or more types of communications standards, including the fifth generation (5G) communication standard of the third generation partnership project (3GPP). A wireless communications network implementing 5G communication standards can be referred to as a 5G system (5GS).

Currently, a 5GS allows only radio access networks (RAN) to be shared across multiple operator networks (e.g., CNs of multiple operators). This is done through a multi-operator CN (MOCN) sharing mechanism where the RAN resources are shared by multiple participating operators. 5G MOCN for 5GS, including UE, RAN and access and mobility management function (AMF) support use of more than one public land mobile network (PLMN) identifier (ID) (i.e., with same or different mobile country code (MCC) and different mobile network codes (MNC)) or combinations of PLMN ID and network OD (NID). 5G MOCN supports next generation RAN (NG-RAN) sharing with or without multiple cell Identity broadcasts.

Limitations of 5G MOCN can include the following. With 5G MOCN the challenge for the network operators is the maintenance generated by direct interfaces (e.g., a large number of N2 (RAN-AMF) and N3 (RAN-UPF (user plane function)) interfaces) between the shared RAN and two or more core networks of different operators, especially for a large number of shared 5G base stations as each of these BS connects to AMF and UPF in the participating network. Hence, it can be beneficial to introduce a new network sharing mechanism with lesser maintenance overhead based on the operator agreements.

One or more of the techniques, described herein, include solutions to these deficiencies by providing for indirect network sharing. Indirect network sharing can occur between a hosting operator network and one or more participating operator networks. The hosting operator network can include one or more RANs (e.g., base stations) connected to a portion of a CN of the hosting operator network. The CN components of the hosting operator network can be connected to the CNs of the participating operator networks. The RANs of the hosting operator network can be shared between the participating operator networks.

Base stations in a shared RAN can broadcast multiple PLMN IDs, including the PLMN ID of the hosting operator network and the several PLMN IDs of participating operators network. Multiple PLMN IDs can be supported by the serving AMF (i.e. the AMF in the CN of the hosting operator network). A UE with a subscription from a participating operator (HPLMN or equivalent PLMN) can select the PLMN ID representing the participating operator in the shared RAN area. The serving AMF can select CN functions in the PLMN of the participating operator for the UE, based on home routed roaming architecture principle. In addition, the serving AMF can select the session management function (SMF) of participating operator network, optionally considering UE location information, and can also select a visited SMF (V-SMF) in the hosting operator network during a protocol data unit (PDU) session establishment procedure. If the hosting operator network (e.g., the serving AMF) determines that the UE is not from (e.g., registered with) a participating operator network of the selected PLMN ID, then the hosting operator network can reject the UE with an existing cause value, rejection message, etc.

An AMF of the hosting operator network can determine whether the UE is registered with the participating operator network of the selected PLMN ID. The AMF would be configured with the identifiers (PLMN IDs) of all the participating network operators based on agreements between the hosting operator and corresponding participating network operators. If the UE does not use one of these identifiers, the AMF can be configured to determine a registration request is invalid. These and other features and examples of indirect network sharing are discussed below with reference to the Figures that follow.

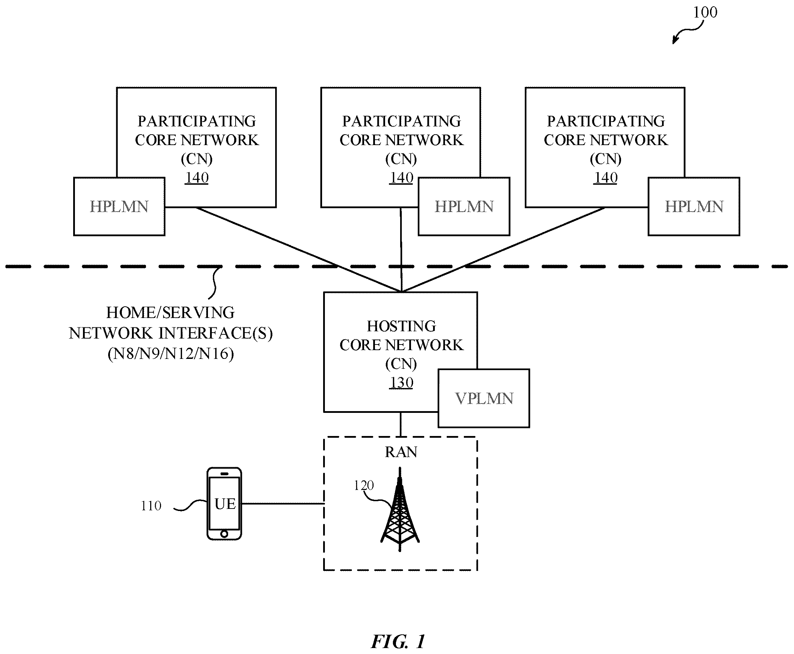

Fig. 1 is a diagram of an example overview 100 of one or more of the implementations described herein. As shown, overview 100 can include UE 110, base station 120, hosting CN 130, and participating CNs 140. Hosting CN 130 can be a visiting PLMN (VPLMN) with respect to UE 110, and one or more participating CNs 140 can be a home PLMN (HPLMN) with respect to UE 110. UE 110 can receive from base station 120 PLMN IDs corresponding to hosting CN 130 and participating CNs 140. UE 110 can select a PLMN ID base on a PLMN to which UE 110 is subscribed for services. UE 110 can communicate with hosting CN 130 to perform one or more procedures based on the selected PLMN ID. Functions of hosting CN 130 can identify, select, and/or communicate with functions of participating CNs 140 via different types of interfaces (e.g., interfaces N8, N9, N12, and N16) to complete one or more procedures. Examples of such procedures can include an authentication procedure, registration procedure, PDU session establishment procedure, and more. Additional examples of these and many other techniques, features, and implementations are described below with reference to the figures that follow.

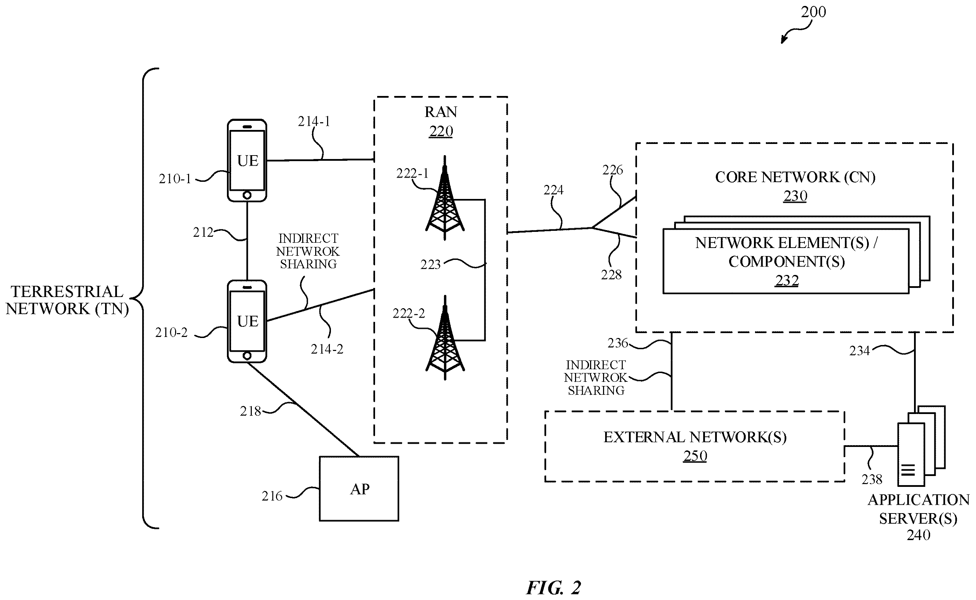

Fig. 2 is an example network 200 according to one or more implementations described herein. Example network 200 can include UEs 210-1, 210-2, etc. (referred to collectively as "UEs 210" and individually as "UE 210"), a radio access network (RAN) 220, a core network (CN) 230, application servers 240, external networks 250. The systems and devices of example network 200 can operate in accordance with one or more communication standards, such as 2nd generation (2G), 3rd generation (3G), 4th generation (4G) (e.g., long-term evolution (LTE)), and/or 5th generation (5G) (e.g., new radio (NR)) communication standards of the 3rd generation partnership project (3GPP). Additionally, or alternatively, one or more of the systems and devices of example network 200 can operate in accordance with other communication standards and protocols discussed herein, including future versions or generations of 3GPP standards (e.g., sixth generation (6G) standards, seventh generation (7G) standards, etc.), institute of electrical and electronics engineers (IEEE) standards (e.g., wireless metropolitan area network (WMAN), and more.

As shown, UEs 210 can include smartphones (e.g., handheld touchscreen mobile computing devices connectable to one or more wireless communication networks). Additionally, or alternatively, UEs 210 can include other types of mobile or non-mobile computing devices capable of wireless communications, such as personal data assistants (PDAs), pagers, laptop computers, desktop computers, wireless handsets, etc. In some implementations, UEs 210 can include internet of things (IoT) devices (or IoT UEs) that can comprise a network access layer designed for low-power IoT applications utilizing short-lived UE connections. Additionally, or alternatively, an IoT UE can utilize one or more types of technologies, such as machine-to-machine (M2M) communications or machine-type communications (MTC) (e.g., to exchanging data with an MTC server or other device via a public land mobile network (PLMN)), proximity-based service (ProSe) or device-to-device (D2D) communications, sensor networks, IoT networks, and more. Depending on the scenario, an M2M or MTC exchange of data can be a machine-initiated exchange, and an IoT network can include interconnecting IoT UEs (which can include uniquely identifiable embedded computing devices within an Internet infrastructure) with short-lived connections. In some scenarios, IoT UEs can execute background applications (e.g., keep-alive messages, status updates, etc.) to facilitate the connections of the IoT network.

UEs 210 can communicate and establish a connection with one or more other UEs 210 via one or more wireless channels 212, each of which can comprise a physical communications interface / layer. The connection can include an M2M connection, MTC connection, D2D connection, SL connection, etc. The connection can involve a PC5 interface. In some implementations, UEs 210 can be configured to discover one another, negotiate wireless resources between one another, and establish connections between one another, without intervention or communications involving RAN node 222 or another type of network node. In some implementations, discovery, authentication, resource negotiation, registration, etc., can involve communications with RAN node 222 or another type of network node.

UEs 210 can communicate and establish a connection with RAN 220, which can involve one or more wireless channels 214-1 and 214-2, each of which can comprise a physical communications interface / layer. In some implementations, a UE can be configured with dual connectivity (DC) as a multi-radio access technology (multi-RAT) or multi-radio dual connectivity (MR-DC), where a multiple receive and transmit (Rx/Tx) capable UE can use resources provided by different network nodes (e.g., 222-1 and 222-2) that can be connected via non-ideal backhaul (e.g., where one network node provides NR access and the other network node provides either E-UTRA for LTE or NR access for 5G). A network node can be referred to herein as a base station 222. In such a scenario, one network node can operate as a master node (MN) and the other as the secondary node (SN). The MN and SN can be connected via a network interface, and at least the MN can be connected to the CN 230. In some implementations, a base station (as described herein) can be an example of network node 222. In some scenarios, RAN 220 can coordinate with core network 230 via interfaces 224, 226, and/or 228.

As shown, UE 210 can also, or alternatively, connect to access point (AP) 216 via connection interface 218, which can include an air interface enabling UE 210 to communicatively couple with AP 216. AP 216 can comprise a wireless local area network (WLAN), WLAN node, WLAN termination point, etc. The connection interface 218 can comprise a local wireless connection, such as a connection consistent with any IEEE 802.11 protocol, and AP 216 can comprise a wireless fidelity (Wi-Fi^{®}) router or other AP. While not explicitly depicted in Fig. 2, AP 216 can be connected to another network (e.g., the Internet) without connecting to RAN 220 or CN 230. In some scenarios, UE 210, RAN 220, and AP 216 can be configured to utilize LTE-WLAN aggregation (LWA) techniques or LTE WLAN radio level integration with IPsec tunnel (LWIP) techniques. LWA can involve UE 210 in RRC_CONNECTED being configured by RAN 220 to utilize radio resources of LTE and WLAN. LWIP can involve UE 210 using WLAN radio resources (e.g., connection interface 218) via IPsec protocol tunneling to authenticate and encrypt packets (e.g., Internet Protocol (IP) packets) communicated via connection interface 218. IPsec tunneling can include encapsulating the entirety of original IP packets and adding a new packet header, thereby protecting the original header of the IP packets.

RAN 220 can include one or more RAN nodes 222-1 and 222-2 (referred to collectively as RAN nodes 222, and individually as RAN node 222) that enable channels 214-1 and 214-2 to be established between UEs 210 and RAN 220. RAN nodes 222 can include network access points configured to provide radio baseband functions for data and/or voice connectivity between users and the network based on one or more of the communication technologies described herein (e.g., 2G, 3G, 4G, 5G, WiFi^{®}, etc.). As examples therefore, a RAN node can be an E-UTRAN Node B (e.g., an enhanced Node B, eNodeB, eNB, 4G base station, etc.), a next generation base station (e.g., a 5G base station, NR base station, next generation eNBs (gNB), etc.). RAN nodes 222 can include a roadside unit (RSU), a transmission reception point (TRxP or TRP), and one or more other types of ground stations (e.g., terrestrial access points). In some scenarios, RAN node 222 can be a dedicated physical device, such as a macrocell base station, and/or a low power (LP) base station for providing femtocells, picocells or the like having smaller coverage areas, smaller user capacity, or higher bandwidth compared to macrocells. A RAN node can generally be referred to herein as base station 222.

Some or all of RAN nodes 222, or portions thereof, can be implemented as one or more software entities running on server computers as part of a virtual network, which can be referred to as a centralized RAN (CRAN) and/or a virtual baseband unit pool (vBBUP). In these implementations, the CRAN or vBBUP can implement a RAN function split, such as a packet data convergence protocol (PDCP) split wherein radio resource control (RRC) and PDCP layers can be operated by the CRAN/vBBUP and other Layer 2 (L2) protocol entities can be operated by individual RAN nodes 222; a media access control (MAC) / physical (PHY) layer split wherein RRC, PDCP, radio link control (RLC), and MAC layers can be operated by the CRAN/vBBUP and the PHY layer can be operated by individual RAN nodes 222; or a "lower PHY" split wherein RRC, PDCP, RLC, MAC layers and upper portions of the PHY layer can be operated by the CRAN/vBBUP and lower portions of the PHY layer can be operated by individual RAN nodes 222. This virtualized framework can allow freed-up processor cores of RAN nodes 222 to perform or execute other virtualized applications.

In some implementations, an individual RAN node 222 can represent individual gNB-distributed units (DUs) connected to a gNB-control unit (CU) via individual F1 or other interfaces. In such implementations, the gNB-DUs can include one or more remote radio heads or radio frequency (RF) front end modules (RFEMs), and the gNB-CU can be operated by a server (not shown) located in RAN 220 or by a server pool (e.g., a group of servers configured to share resources) in a similar manner as the CRAN/vBBUP. Additionally, or alternatively, one or more of RAN nodes 222 can be next generation eNBs (i.e., gNBs) that can provide evolved universal terrestrial radio access (E-UTRA) user plane and control plane protocol terminations toward UEs 210, and that can be connected to a 5G core network (5GC) 230 via an NG interface.

Any of the RAN nodes 222 can terminate an air interface protocol and can be the first point of contact for UEs 210. In some implementations, any of the RAN nodes 222 can fulfill various logical functions for the RAN 220 including, but not limited to, radio network controller (RNC) functions such as radio bearer management, uplink and downlink dynamic radio resource management and data packet scheduling, and mobility management. UEs 210 can be configured to communicate using orthogonal frequency-division multiplexing (OFDM) communication signals with each other or with any of the RAN nodes 222 over a multicarrier communication channel in accordance with various communication techniques, such as, but not limited to, an OFDMA communication technique (e.g., for downlink communications) or a single carrier frequency-division multiple access (SC-FDMA) communication technique (e.g., for uplink and ProSe or sidelink (SL) communications), although the scope of such implementations may not be limited in this regard. The OFDM signals can comprise a plurality of orthogonal subcarriers.

In some implementations, a downlink resource grid can be used for downlink transmissions from any of the RAN nodes 222 to UEs 210, and uplink transmissions can utilize similar techniques. The grid can be a time-frequency grid (e.g., a resource grid or time-frequency resource grid) that represents the physical resource for downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises resource blocks, which describe the mapping of certain physical channels to resource elements (REs). Each resource block can comprise a collection of resource elements; in the frequency domain, this can represent the smallest quantity of resources that currently can be allocated. There are several different physical downlink channels that are conveyed using such resource blocks.

Further, RAN nodes 222 can be configured to wirelessly communicate with UEs 210, and/or one another, over a licensed medium (also referred to as the "licensed spectrum" and/or the "licensed band"), an unlicensed shared medium (also referred to as the "unlicensed spectrum" and/or the "unlicensed band"), or combination thereof. A licensed spectrum can correspond to channels or frequency bands selected, reserved, regulated, etc., for certain types of wireless activity (e.g., wireless telecommunication network activity), whereas an unlicensed spectrum can correspond to one or more frequency bands that are not restricted for certain types of wireless activity.

A physical downlink shared channel (PDSCH) can carry user data and higher layer signaling to UEs 210. The physical downlink control channel (PDCCH) can carry information about the transport format and resource allocations related to the PDSCH channel, among other things. The PDCCH can also inform UEs 210 about the transport format, resource allocation, and hybrid automatic repeat request (HARQ) information related to the uplink shared channel. Typically, downlink scheduling (e.g., assigning control and shared channel resource blocks to UE 210 within a cell) can be performed at any of the RAN nodes 222 based on channel quality information fed back from any of UEs 210. The downlink resource assignment information can be sent on the PDCCH used for (e.g., assigned to) each of UEs 210.

One or more of the techniques described herein can include solutions for indirect network sharing. For example, UE 210 can receive from base station 222 PLMN IDs corresponding to a hosting operator network and at least one participating operator network. UE 210 can select a PLMN ID of a participating operator network to which UE 210 is subscribed. UE 210 can communicate with the hosting operator network to perform one or more procedures based on the PLMN ID of the participating operator network. Examples of such procedures can include an authentication procedure, registration procedure, PDU session establishment procedure, and more. One or more functions of the CN 230 of the hosting operator network can select and communicate with one or more functions in the participating operator to complete the procedures. Many other aspects and examples are also described herein.

The RAN nodes 222 can be configured to communicate with one another via interface 223. In implementations where the system is an LTE system, interface 223 can be an X2 interface. In NR systems, interface 223 can be an Xn interface. The X2 interface can be defined between two or more RAN nodes 222 (e.g., two or more eNBs / gNBs or a combination thereof) that connect to evolved packet core (EPC) or CN 230, or between two eNBs connecting to an EPC.

As shown, RAN 220 can be connected (e.g., communicatively coupled) to CN 230. CN 230 can comprise a plurality of network elements 232, which are configured to offer various data and telecommunications services to customers/subscribers (e.g., users of UEs 210) who are connected to the CN 230 via the RAN 220. In some implementations, CN 230 can include an evolved packet core (EPC), a 5G CN (5GC), and/or one or more additional or alternative types of CNs. The components of the CN 230 can be implemented in one physical node or separate physical nodes including components to read and execute instructions from a machine-readable or computer-readable medium (e.g., a non-transitory machine-readable storage medium). In some implementations, network function virtualization (NFV) can be utilized to virtualize any or all the above-described network node roles or functions via executable instructions stored in one or more computer-readable storage mediums (described in further detail below).

A logical instantiation of the CN 230 can be referred to as a network slice, and a logical instantiation of a portion of the CN 230 can be referred to as a network sub-slice. Network function virtualization (NFV) architectures and infrastructures can be used to virtualize one or more network functions, alternatively performed by proprietary hardware, onto physical resources comprising a combination of industry-standard server hardware, storage hardware, or switches. In other words, NFV systems can be used to execute virtual or reconfigurable implementations of one or more EPC components/functions.

As shown, CN 230, application servers 240, and external networks 250 can be connected to one another via interfaces 234, 236, and 238, which can include IP network interfaces. Application servers 240 can include one or more server devices or network elements (e.g., virtual network functions (VNFs) offering applications that use IP bearer resources with CN 230 (e.g., universal mobile telecommunications system packet services (UMTS PS) domain, LTE PS data services, etc.). Application servers 240 can also, or alternatively, be configured to support one or more communication services (e.g., voice over IP (VoIP sessions, push-to-talk (PTT) sessions, group communication sessions, social networking services, etc.) for UEs 210 via the CN 230. Similarly, external networks 250 can include one or more of a variety of networks, including the Internet, thereby providing the mobile communication network and UEs 210 of the network access to a variety of additional services, information, interconnectivity, and other network features.

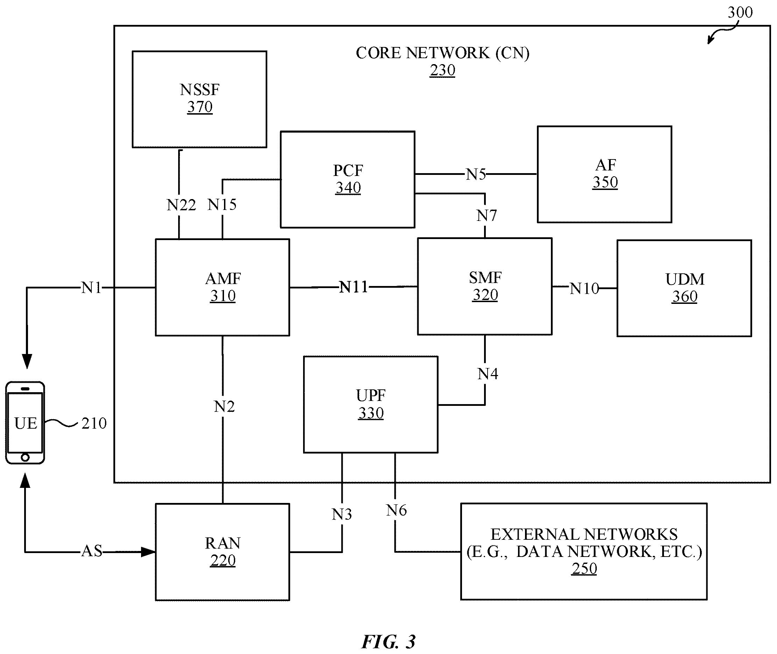

Fig. 3 is a diagram of an example network architecture 300 according to one or more implementations described herein. As shown, example network architecture 300 can include UE 210, RAN 220, CN 230, and external network 250. RAN 220 can include base station 222 and/or one or more other types of APs 216. CN 230 can include access and mobility management function (AMF) 310, session management function (SMF) 320, user plane function (UPF) 330), policy control function (PCF) 340, application function (AF) 350, and unified data management (UDM) function 360. CN 230 can include one or more additional or alternative functions, some of which are described herein with reference to other Figures.

AMF 310, SMF 320, UPF 330, PCF 340, AF 350, and UDM function 360 can be functions of CN 230 and can be implemented by one or more servers in a centralized or distributed networking environment, which can include one or more network virtualization functions (NVF). External network 250 can include a data network that includes one or more application servers, the Internet, another telecommunications network, and/or another type of network. In some implementations, network architecture 300 can include one or more additional, alternative, and/or differently arranged functions, interfaces, or other features than those shown in Fig. 3.

AMF 310 can communicate with RAN 220 via an N2 interface and UE 210 via an N1 interface. AMF 310 can manage authentication, registration, and other functionalities relating to UEs 210 accessing a telecommunication mobile network. AMF 310 can handle handovers, paging, and other functionality regarding the mobility and communications of UEs 210. AMF 310 can also provide security functionality for authenticating and authorizing UEs 210. AMF 310 can communicate with SMF via an N11 interface, with PCF 340 via an N15 interface, and with UPF 330 via an N4 interface.

As described below with reference to the Figures that follow, AMF 310 can enable indirect network sharing by communicating with one or more of UE 210, base station 222, one or more functions of CN 230 of a hosting operator network, and one or more functions of CN 230 of a participating operator network. This can include performing or otherwise participating in the performance of one or more procedures. Examples of such procedures can include an authentication procedure, registration procedure, PDU session establishment procedure, and more.

SMF 320 can provide PDU session management. To do so, SMF 320 can collect information related to managing a PDU session from various network components (e.g., UPF 330, PCF 340, AF 350, etc.) and control or orchestrate the network components based on a request from AMF 310. SMF 320 can be responsible for establishing, maintaining, and terminating user sessions in CN 230. SMF 320 can manage user plane (UP) resources and interact with UPF 330 to ensure that data packets are correctly routed and forwarded.

SMF 320 can receive PDU session establishment and/or session modification request from UE 210. The request can include an indication for assistance with a UL PDU set identification. The request can also indicate a real-time transport protocol (RTP) header extension and/or transport layer protocol corresponding to the requested assistance. SMF 320 can determine whether a protocol description, corresponding to the request, has been provided by PCF 340 and/or AF 350. The protocol description can include information about the RTP header extensions and/or other protocol features used by an application, and in turn, enable UE 210 to identify PDU sets from UL packets. The protocol description can also, or alternatively, include information about one or more other types of transport layer protocols and/or protocol features used by an application, such that UE 210 can identify PDU sets from UL packets based on how the application uses the transport layer protocol.

SMF 320 can include PDU set protocol descriptions, QoS profiles and parameters, quality flow identifiers (QFIs), and/or one or more additional or alternative types of information to, for example, enable UL PDU sets of a given application or service to be appropriately identified. For example, AF 350 can include protocol descriptions for different types of applications and services supported by the network, such as XR applications and/or XRM applications and services. The protocol descriptions can include information to enable UE 210, base stations 222, and other devices to identify PDU sets within a service data flow. SMF 320 can receive the protocol descriptions from AF 350 via PCF 340, and can provide the protocol descriptions to UE 210, RAN 220, UPF 330, and/or one or more of the devices or entities described herein. In some implementations, the protocol descriptions provided by SMF 320 can be based, at least in part, on rules received from PCF 340.

UPF 330 can communicate with RAN 220 via an N3 interface, PCF 340 via an N7 interface, and SMF 320 via an N11 interface, which can be routed through RAN 220. UPF 330 can operate as a point of connection for PDU sessions between RAN 220 and external data network 250 (e.g., the Internet, another telecommunication network, etc.) via interface N6. UPF 330 can also provide support for packet routing, forwarding, and inspection. UPF 330 can provide for user plane rule enforcement, QoS handling, UL/DL rate enforcement, and service data flow (SDF) to QoS flow mapping. UPF 330 can communicate with SMF 320 via an N4 interface and with RAN 220 via an N3 interface.

PCF 340 can provide policy control and flow-based control functionalities. PCF 340 can include and provide policy charging and control (PCC) rules for applications, data flows, PDU sets, gating, QoS, etc., to SMF 320. PCF 340 can also provide access and mobility management policies to AMF 310. PCF 340 can communicate with SMF 320 via an N7 interface and with AMF 310 via an N15 interface.

UE 210 can send and receive information from RAN 220 via an access stratum (AS) interface. UE 210 can also send and receive PDU set information (e.g., protocol descriptions for PDU set information) from SMF 320. QoS flow profiles and PDU set protocol descriptions can also be configured from SMF 320 to RAN 220 and UE 210. Each QoS flow profile and/or PDU set protocol description can be associated with a set of QoS parameters that can be part of a QoS profile stored by RAN 220 and updated by AMF 310. Examples of QoS parameters can include a resource type, packet delay budget (PDB), quality flow identifier (QFI), packet error rate (PER), averaging window, and more. AMF 310 can provide UE 210 with QoS rules during a PDU session via a non-access stratum (NAS) protocol or interface.

AF 350 can include a network function configured to manage traffic and QoS assignments, through interaction with the policy elements. AF 350 can expose an application layer for interaction with 5G network functions (NFs) and network resources. AF 350 can reside in a control plane of a 5G service-based architecture (SBA), and AF 350 can function to access a network repository function (NEF) for retrieving resources, interacting with PCF 340 via an N5 interface, enabling policy control, traffic routing for applications, and providing application services to subscribers.

UDM node 360 can handle subscription-related information to support the handling of communication sessions. UDM node 360 can store subscription data of UE 210, which can be communicated between the UDM node 360 and the AMF 310 via an N8 interface (not shown). UDM node 360 can communicate with SFM 320 via an N10 interface. UDM node 360 can include two parts, an application functional entity (FE) and a unified data repository (UDR). The UDR can store subscription data and policy data for UDM node 360 and PCF 340, and/or structured data for exposure and application data (including packet flow descriptions (PFDs) for application detection and requested information). UDM node 360 can include a UDM-FE, which can process credentials, perform location management, subscription management, and so on. The UDM-FE can also access subscription information stored in the UDR and perform authentication credential processing, user identification handling, access authorization, registration/mobility management, and subscription management.

Network slice selection function (NSSF) 370 can help enable network slicing to enhance the performance of network functions and procedures. Network slicing can leverage software-defined networking (SDN) techniques, network function virtualization (NFV) techniques, etc., to use the physical network infrastructure (e.g., physical components of UE 210, RAN 220, etc.) to create multiple, virtual instances of a network scenario corresponding to a target network procedure and causing each network slice to perform different portions of the network procedure (e.g., multiplexing), such that optimized performance of the procedure is achieved as results from each portion are combined or otherwise processed (e.g., demultiplexed) amounting to the completion of the procedure as a whole. Accordingly, in some scenarios, network slicing can include a network architecture and technique that can enable device and/or network performance enhancement or optimization by using the physical infrastructure resources to create multiple, logical instances of a given network scenario, and causing different portions of a network process, function, or procedure to be performed by the different instance of the network scenario.

Each network slice can be an independent, end-to-end 5G network (which can be logical or physical). Each network slice can span across multiple or all network functions and can be isolated from other slices. Several of the components and functions of Fig. 3 can have specific behaviors related to network slice configuration. For example, UDM 360 can store a subscription for a user (e.g., of UE 210), for example, whether the user has purchased a subscription to a high-definition (HD) streaming slice. PCF 340 can provide rules to UE 210 to identify which traffic to send via which slice. AMF 310 can act as a single point of contact of UE 210 for slice-related configurations. UE 210 can set up slice-specific sessions, and route packets on the appropriate slice(s). The independence of network slices can allow for customization of RAN 220 and/or CN 230 configurations per network slice. From an AS perspective, slice traffic can be part of a separate DRB. From a NAS perspective, slice traffic can be part of separate PDU sessions.

NSSF 370 can help enable network architecture 300 can implement network slice selection assistance information (NSSAI) and single NSSAI (S-NSSAI) to enable efficient and dynamic network slicing. NSSAI can include a set of parameters used to identify and describe a network slice. Examples of these parameters can include a slice differentiator (SD) that can be a globally unique identifier and a slice service type (SST) that can indicate a specific service or application type associated with a network slice. NSSF 370 of the participating operator network can use an N22 interface to communicate with AMF 310.

S-NSSAI can be an extension of NSSAI, specifically designed to support single network slice selection. S-NSSAI can provide additional information to assist UE 210 and the network in selecting the most suitable network slice based on the context and requirements of the communication session. S-NSSAI can involve one or more NSSAIs, each containing an SD and SST pair. Multiple NSSAIs can be included to represent a set of available network slices or to provide fallback options if the primary slice is not available.

When UE 210 initiates a connection with a 5G network, UE 210 can include S-NSSAI information in the initial signaling message (e.g., registration request). The S-NSSAI can reflect desired network slice preferences. The network can match the S-NSSAI with an available network slice instance and selects the most appropriate slice that satisfies one or more corresponding requirements. The selection process can consider one or more factors, such as network resources, quality of service (QoS) policies, and network conditions. S-NSSAI can also be involved in dynamically switching between network slices.

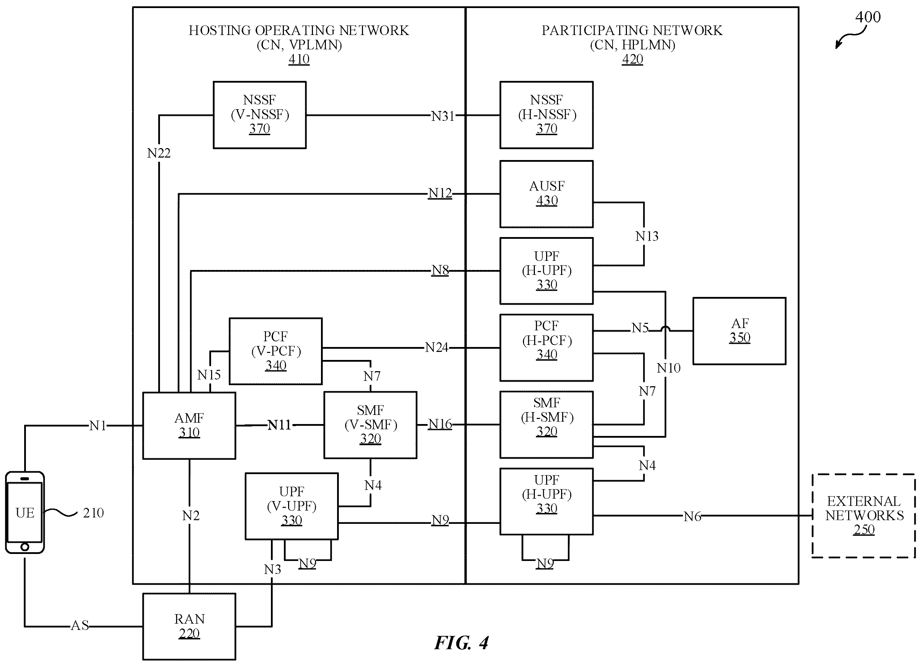

Fig. 4 is a diagram of an example 400 of a hosting operator network and a participating operator network according to one or more implementations described herein. As shown, example 400 can include UE 210, RAN 220, hosting operating network 410, participating operating network 420, authentication server function (AUSF) 430, and other network functions 310 through 340 and 370. One or more of the functions of example 400 can correspond to one or more functions described above with reference to Figure 3. Additionally, some of the functions of example 400 can be configured or operate as a visiting network function or home network function with respect to UE 210. For example, NSSF 370 of hosting operating network 410 can operate as a V-NSSF 370 with respect to UE 210, while NSSF 370 of participating operating network 420 can operate as a H-NSSF 370 with respect to UE 210. RAN 220 can include base station 222 or another type of access network node. Network functions can communicate with one another using an interface as specified (e.g., interface N8, interface N9, interface N12, interface, N16, and so on.).Each interface can be a point of reference for communications between the indicated functions.

AUSF 430 can help enable authentication and authorization procedures. When a subscriber attempts to connect to a 5G network, AUSF 430 can help verify the subscriber identity to ensure UE 210 has authorization to access the network. AUSF 430 can interact with several other network functions. For example, AUSF 430 can communicate with the AMF 310 via an N12 interface to manage subscriber mobility and handover procedures and UDM function 360 to manage subscriber data and profiles. AUSF 430 can also help provide robust security features, including encryption and authentication mechanisms, to protect against unauthorized access and data breaches.

Base station 222 can broadcast multiple PLMN IDs, including the PLMN ID of the hosting operator network and PLMN IDs of participating operator networks. Examples of PLMN IDs that can be involved in indirect network sharing can include a serving PLMN ID, home PLMN (HPLMN) ID, and selected PLMN ID. A serving PLMN ID can include the PLMN ID supported by AMF 310 of the hosting operator network. A home PLMN ID can be derived from a subscription permanent identifier (SUPI) which can be associated with the participating operator network for UE 210 (e.g., the home PLMN). A selected PLMN ID can be the PLMN ID selected by UE 210 from the broadcast information base station 222, which can be associated with the participating operator network.

In one example, UE 210 can be subscribed with a first operator network that corresponds to an HPLMN for UE 210. A second operator network can correspond to a hosting or serving PLMN by providing base station 222. A third operator network can correspond to a participating operating network relative to the second (or hosting) operator network. The third operator network can have an agreement with the second operator network such that UEs 210 can use base station 222 to connect to the third operator network via the second operator network. The third operator network can also have an agreement with the first operator agreement, such that UE 210 can connect to third operator network as though the third operator network were the HPLMN of UE 210. In such a scenario, UE 210 can select a PLMN of the participating operating network in which case the selected PLMN is actually the PLMN of the third operator network.

The participating operator network can be handled as the HPLMN and the hosting operator network can be handled as a visiting PLMN (VPLMN). The serving AMF 310 can be the AMF in the CN 230 of the hosting operator network. The serving AMF 310 can select a visiting SMF (V-SMF) 320 in the hosting operator network. V-SMF 320 (as a control plane (CP) network function (NF)) in the hosting operator network can support the PLMN ID representing the participating operator network. The CP NFs of the hosting operator network can register the NF profiles, including the PLMN ID(s) representing the participating operator network.

Thus, the PLMN ID(s) of the participating operator network can be used to discover the NFs of the hosting operator network. UE 210 can select the PLMN ID representing the participating operator network of base station 222. UE 210 may not know the PLMN ID representing the hosting operator network. The network (e.g., AMF 310, authentication server function (AUSF) 430 and UDM 360) and UE 210 can use the same serving network (SN) identifier (SN ID) of the serving network for derivation of keys during authentication. As such, the serving network identifier ID used by UE 210, AMF 310, the AUSF and UDM 360 in primary authentication can be set to the PLMN ID of the selected participating operator network. The HPLMN can include a PLMN ID representing the participating operator network in indirect network sharing in the list of equivalent PLMNs and send to UE 210.

UE 210 can be subscribed with a participating operator network (e.g., which can be an HPLMN for UE 210). UE 210 can select a PLMN ID representing the participating operator network. The selected PLMN can be an HPLMN ID, an equivalent HPLMN (EHPLMN) ID that is in an EHPLMN list stored on a universal subscriber identity module (USIM), or a PLMN ID which is in the list of equivalent PLMNs (EPLMNs) provided by HPLMN and stored in the non-volatile memory of UE 210. An operator may not have much coverage, so participating operator networks can collaborate with one another such that roaming will not be applied. Such networks can be referred to as an EPLMN or EHPLMN.

UE 210 with a subscription from a participating operator network can select the PLMN ID of the participating operator network via base station 222. During a registration procedure, UE 210 can include the serving single network slice selection assistance information (S-NSSAI(s)) of the participating operator network in the requested NSSAI. The serving AMF 310 (of the hosting operator network) can determine S-NSSAIs of the hosting operator network (e.g., VPLMN S-NSSAIs) based on an S-NSSAI mapping configuration between the hosting operator network and participating operator network. The serving AMF 310 can acquire the S-NSSAI mapping from a network slice selection function (NSSF) 370 of the hosting operator network.

The serving AMF 310 can also checks whether the corresponding S-NSSAIs of hosting operator network are supported by base station 222. If none of the corresponding SNSSAIs of the hosting operator network are supported, the serving AMF 310 can reject the registration request. AMF 310 of the hosting operator network can determine to use which existing cause value to use based on a configuration agreement between the hosting operator network and the participating operator network. A cause value, as referred to herein, can include cause #13 - Roaming not allowed in this tracking area; cause #15 - No suitable cells in tracking area; cause #12 - Tracking area not allowed; cause #62 - No network slices available; cause #65 - Maximum number of PDU sessions reached; and cause #67 - Insufficient resources for specific slice and DNN.

Otherwise, the serving AMF 310 can continue the registration procedure and/or can send, to UE 210, an allowed NSSAI, partially allowed NSSAI, rejected S-NSSAIs, and a configured NSSAI, which only contains the S-NSSAI(s) of the participating operator network. During a UE configuration update procedure, the serving AMF 310 of the hosting operator network can determine the S-NSSAI(s) of hosting operator corresponding to the SNSSAI(s) of participating operator network and can send to UE 210 the NSSAI(s) (e.g. allowed NSSAI, partially allowed NSSAI, rejected NSSAI, partially rejected NSSAI, and configured NSSAI) including only S-NSSAI(s) for the PLMN ID representing participating operator network.

During a PDU session establishment procedure, UE 210 can includes the S-NSSAI(s) of the participating operator network in the PDU session establishment request. After receiving the S-NSSAI of the participating operator network from UE 210, the serving AMF 310 can use the list of S-NSSAIs of the hosting operator network corresponding to the S-NSSAIs of the participating operator to determine the S-NSSAI of the hosting operator network (e.g., VPLMN S-NSSAI) to be used as the S-NSSAI belonging to the allowed NSSAI. The serving AMF 310 can use VPLMN S-NSSAIs and HPLMN S-NSSAIs for the PDU session establishment procedure.

AMF 310 of the hosting operator network can determine the S-NSSAI(s) of hosting operator network corresponding to the S-NSSAI(s) of the participating operator network included in the requested NSSAI, and the AMF 310 of the hosting operator network can provide the network slicing related information (e.g., the configured NSSAI, the allowed NSSAI, the partially allowed NSSAI, the rejected NSSAI, and the partially rejected NSSAI, including only S-NSSAI(s) for the PLMN ID representing participating operator network. If none of the S-NSSAI(s) of hosting operator network corresponding to the S-NSSAI(s) of the participating operator network included in the requested NSSAI are allowed, AMF 310 of the hosting operator network can send a registration message (e.g., "no network slices available").

AMF 310 of the hosting operator network can determine the S-NSSAI(s) of the hosting operator network corresponding to the S-NSSAI(s) of participating operator network included in the requested NSSAI, and AMF 310 of the hosting operator network can provide the network slicing related information (e.g., the configured NSSAI, the allowed NSSAI, the partially allowed NSSAI, the rejected NSSAI, and the partially rejected NSSAI) including only S-NSSAI(s) for the PLMN ID representing participating operator network. In the case of indirect network sharing, if none of the S-NSSAI(s) of hosting operator network corresponding to the S-NSSAI(s) of participating operator network included in the requested NSSAI are allowed, AMF 310 of the hosting operator network can send a registration reject message (e.g., "no network slices available").

During the UE configuration update (UCU) procedure, In the case of indirect network sharing, AMF 310 of the hosting operator network can determine the S-NSSAI(s) of hosting operator network corresponding to the S-NSSAI(s) of participating operator network, and AMF 310 of the hosting operator network can send the NSSAI(s) (e.g., the allowed NSSAI, partially allowed NSSAI, rejected NSSAI, partially rejected NSSAI, and configured NSSAI) including only S-NSSAI(s) for the PLMN ID representing participating operator network UE 210.

During the protocol data unit (PDU) procedure, UE 210 can include the S-NSSAI for the PLMN ID representing the participating operator network. AMF 310 of the hosting operator network can determine the S-NSSAI of hosting operator network corresponding to the S-NSSAI of participating operator network provided by UE 210, and AMF 310 of the hosting operator network can use the S-NSSAI of hosting operator network. When UE 210 is not allowed to access the selected PLMN associated with the participating operator network, AMF 310 of the hosting operator network can send a registration reject message with an existing cause value, and AMF 310 of the hosting operator network can determine to use an existing cause value that is based on an agreement configuration between the hosting operator network and the participating operator network.

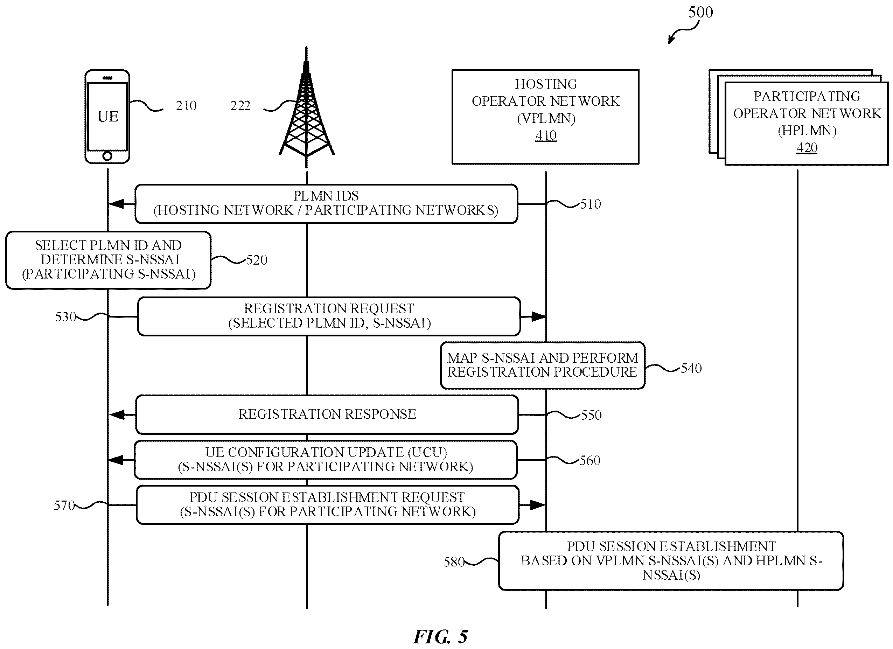

Fig. 5 is a diagram of an example process 500 for indirect network according to one or more implementations described herein. As shown, process 500 can be implemented by UE 210, base station 222, hosting operator network 410, and one or more participating operator network 420. In some implementations, some or all of process 500 can be performed by one or more other systems or devices, including one or more of the devices of Figs. 2-4. Additionally, process 500 can include one or more fewer, additional, differently ordered and/or arranged operations than those shown in Fig. 5. In some implementations, some or all of the operations of process 500 can be performed independently, successively, simultaneously, etc., of one or more of the other operations of process 500. As such, the techniques described herein are not limited to the number, sequence, arrangement, timing, etc., of the operations or processes depicted in Fig. 5. A serving AMF, as referred to herein, can include AMF 310 of a hosting operator network 410.

As shown, process 500 can include communicating PLMN IDs to UE 210 (at 510). The PLMN IDs can be sent by base station 222 and/or hosting operator network 410. For example, hosting operator network 410 can provide the PLMN IDs to base station 222, and base station 222 can provide the PLMN IDs to UE 210. The PLMN IDs can include a PLMN ID of the hosting operator network and one or more PLMN IDs of participating operator networks. The PLMN IDs can be supported by AMF 310 of CN 230 of the hosting operator network. Base station 222 can broadcast multiple PLMN IDs, including the PLMN ID of the hosting operator network and PLMN IDs of participating operator networks. Examples of PLMN IDs that can be involved in indirect network sharing can include a serving PLMN ID and home PLMN (HPLMN) ID. A serving PLMN ID can include the PLMN ID supported by AMF 310 of the hosting operator network. A home PLMN ID can be derived from a subscription permanent identifier (SUPI) which can be associated with the participating operator network for UE 210 (e.g., the home PLMN).

Process 500 can include UE 210 selecting a PLMN ID, of the PLMN IDs from base station 222, associated with a participating operator network (at 520). UE 210 can also determine an S-NSSAI associated with the selected PLMN ID. UE 210 can select the PLMN ID based on UE 210 being subscribed to the participating operator network. The selected PLMN ID can be a home PLMN (HPLMN) of UE 210. Process 500 can include UE 210 responding to the shared network using the selected PLMN ID and S-NSSAI (at 530). A shared network or shared RAN, as referred to herein, can include a hosting operator network. UE 210 can communicate a registration request message, which can include an indication that UE 210 has requested to register with and become connected to the participating operator network.

Process 500 can include serving AMF 310 mapping the S-NSSAI of participating operator network 420 and performing a registration procedure (block 540). AMF 310 can map the S-NSSAI of participating operator network 420 to one or more S-NSSAIs of hosting operator network 410. AMF 310 can also determine whether UE 210 is subscribed to the participating operator network associated with the selected PLMN ID.

A selected PLMN ID can be the PLMN ID |selected by UE 210 from the broadcast information base station 222, which can be associated with the participating operator network. The participating operator network can be handled as the HPLMN and the hosting operator network can be handled as a visiting PLMN (VPLMN). The serving AMF 310 can be the AMF in the CN 230 of the hosting operator network. The serving AMF 310 can select a visiting SMF (V-SMF) 320 in the hosting operator network. V-SMF 320 (as a control plane (CP) network function (NF)) in the hosting operator network can support the PLMN ID representing the participating operator network. The CP NFs of the hosting operator network can register the NF profiles, including the PLMN ID(s) representing the participating operator network.

Process 500 can include AMF 310 of the hosting operator network sending a registration response to UE 210 (at 550). The registration response can include an indication of whether UE has been registered. When UE 210 is subscribed to the participating operator network, the registration response message can indicate that UE 210 is registered. When UE 210 is not subscribed to the participating operator network, the registration response message can indicate that UE 210 is not registered.

Process 500 can include serving AMF 310 of hosting operator network 410 performing UE configuration update (UCU) procedure (at 560). This can include serving AMF 310 determining one or more S-NSSAIs for hosting operator network 410 and/or participating operator network 420 based on the selected PLMN ID and/or S-NSSAI from UE 210. Examples of the S-NSSAIs can include an allowed NSSAI, partially allowed NSSAI, rejected NSSAI, partially rejected NSSAI, and configured NSSAI or either hosting operator network 410 and/or participating operator network 420.

Process 500 can include UE 210 sending a PDU session establishment request to AMF 310 of hosting operator network 410 (at 570). The PDU session establishment request can include one or more S-NSSAIs of participating operator network 420. Examples of the S-NSSAIs can include an allowed NSSAI, partially allowed NSSAI, rejected NSSAI, partially rejected NSSAI, and configured NSSAI. UE 210 can determine which type of S-NSSAI is appropriate for the PDU session establishment request. In some implementations, UE 210 can send the PDU session establishment request using whichever S-NSSAI was received from hosting operator network 410.

Process 500 can include hosting operator network 410 communicating participating operator network 420 to establish a PDU session (at 580). AMF 310 of hosting operator network 410 can map S-NSSAIs of participating operator network 420 (e.g., one or more HPLMN S-NSSAIs) to S-NSSAIs of hosting operator network 410 (e.g., one or more VPLMN S-NSSAIs). The PDU session establishment procedure can include AMF 310 hosting operator network 410 select CN functions according to the selected PLMN ID of participating operator network 420. AMF 310 of hosting operator network 410 can select the CN functions based on a home routed roaming architecture principle as described herein. For example, serving AMF 310 can select SMF 320 of participating operator network 420. In doing so, AMF 310 of hosting operator network 410 can select SMF 320 based, at least in part, on UE location information. AMF 310 of hosting operator network 410 can also select a V-SMF 320 in its own CN 230 during the PDU session establishment procedure. While not shown, upon establishing the PDU session, AMF 310 of hosting operator network 410 and/or AMF 310 of participating operator network 420 can send UE 210 a message or notification of the PDU session having been established.

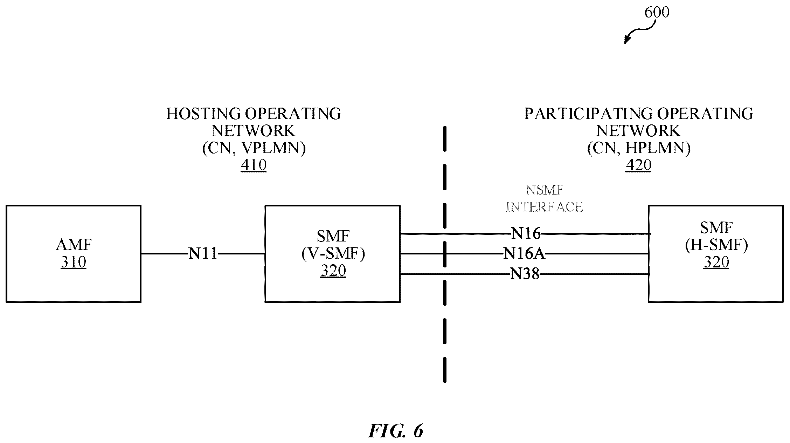

Fig. 6 is a diagram of an example 600 of session management function (SMF) interfaces between hosting operator network 410 and participating operator network 420 according to one or more implementations described herein.

As shown, example 600 can include AMF 310, SMFs 320, and more. One or more of the functions of example 600 can correspond to one or more functions described above with reference to the Figures described herein. Additionally, some of the functions of example 600 can be configured or operate as a visiting network function or home network function with respect to UE 210. For example, SMF 320 of hosting operating network 410 can operate as a V-SMF 320 with respect to UE 210, while SMF 320 of participating operating network 420 can operate as a H-SMF 320 with respect to UE 210. Network functions can communicate with one another using an interface as specified (e.g., interface N11, interface N16, interface N16a, interface N38, and so on.). Each interface can be a point of reference for communications between the indicated functions.

The N16 interface can be used between the visited SMF (V-SMF) 320 of the hosting operator network and SMF 320 of the participating operator network in indirect network sharing deployments. The N16 interface can be a reference point between the V-SMF and home SMF 320 (H-SMF) in home routed (HR) roaming cases, or between the V-SMF 320 (in the hosting operator's network) and the H-SMF (in the participating operator's network). An The N16a interface can be a reference point between SMF 320 and I-SMF 320. The N38 interface can be a reference point between an immediate SMFs 320 (I-SMFs) or V-SMFs320. An I-SMF 320 can help managing UE sessions when UE 210 moves between different SMF serving areas. AMF can use an N11 interface as a reference point to communicate with V-SMF 320. As shown, the network SMF interface (Nsmf) can be used to identify, access, and communicate with different network slices for a communication session. The Nsmf interface can be configured between V-SMF 320 and H-SMF 320, and can include interfaces N16, N16a, and/or N38..

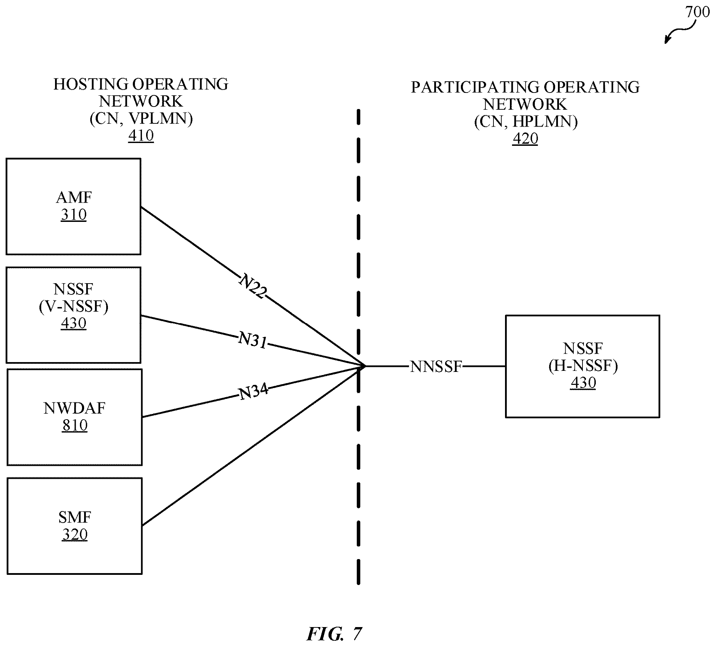

Fig. 7 is a diagram of an example 700 of a network slice selection function (NSSF) interface between hosting operator network 410 and participating operator network 420 according to one or more implementations described herein. As shown, example 700 can include AMF 310, NSSFs 370, network data analytics function (NWDAF) 710, SMF 320, and more. One or more of the functions of example 700 can correspond to one or more functions described above with reference to the Figures described herein. Additionally, some of the functions of example 700 can be configured or operate as a visiting network function or home network function with respect to UE 210. For example, NSSF 370 of hosting operating network 410 can operate as a V-NSSF 370 with respect to UE 210, while NSSF 370 of participating operating network 420 can operate as a H-NSSF 370 with respect to UE 210. RAN 220 can include base station 222 or another type of access network node. Network functions can communicate with one another using an interface as specified (e.g., interface N22, interface N31, interface N34, and so on.). Each interface can be a point of reference for communications between the indicated functions.

NWDAF 710 can be configured to provide analytics functions in the network for automation or reporting, solving major custom interface or format challenges. NWDAF 710 can collect and process statistics, metrics, and events from 5G network functions. NWDAF 710 can retrieve management statistics from operations, administration, and maintenance (OAM) systems, provide for network function discovery and identification, and perform machine learning (ML) modeling and help develop ML models based the statistics collected.

During the registration procedure, a requested a network slice selection function (NSSF) (including the S-NSSAI(s) of participating operator network) can be received from UE 210. After receiving the registration request including the above information, serving AMF 310 can determine the corresponding S-NSSAIs of the hosting operator network (e.g., VPLMN S-NSSAIs) based on the S-NSSAI mapping configuration between hosting operator network and participating operator network or can acquire the S-NSSAI mapping from the NSSF 370 of hosting operator's network.

This can involve information elements (IE) and/or parameters such as esNssaiForMapping and requestMapping attributes in SliceInfoForRegistration data. The esNssaiForMapping IE can include the S-NSSAIs for the HPLMN or EHPLMN in in the case of indirect network sharing. The requestMapping IE can be present and set to true by the serving AMF of the hosting operator network to retrieve the S-NSSAIs of the hosting operator in the case of indirect network sharing. In that case, the NSSAI in sNssaiForMapping IE can contain the S-NSSAIs of the participating operator network. NSSF 370 of the participating operator network can use an N22 interface to communicate with AMF 310 of the hosting operator network, an N31 interface to communicate with NSSF 370 of the hosting operator network, an N34 interface to communicate with network data analytics function (NWDAF) 710 of the hosting operator network, and another interface to communicate with SMF 320 of the hosting operator network.

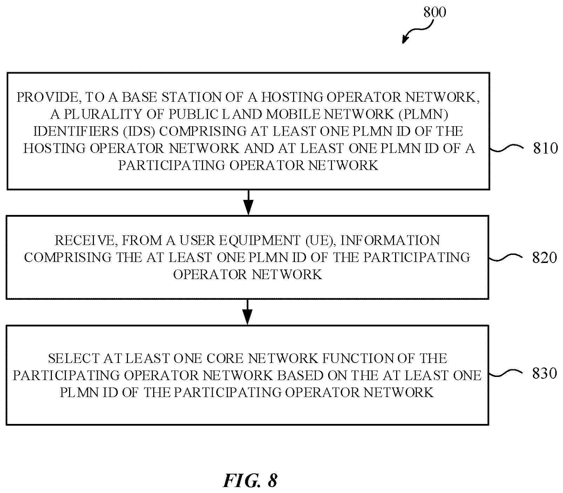

Fig. 8 is a diagram of an example process 800 for real-time precise ionosphere corrections according to one or more implementations described herein. As shown, process 800 can be implemented by I&D server 280. In some implementations, some or all of process 800 can be performed by one or more other systems or devices, including one or more of the devices of Fig. 2. Additionally, process 800 can include one or more fewer, additional, differently ordered and/or arranged operations than those shown in Fig. 8. In some implementations, some or all of the operations of process 800 can be performed independently, successively, simultaneously, etc., of one or more of the other operations of process 800. As such, the techniques described herein are not limited to the number, sequence, arrangement, timing, etc., of the operations or processes depicted in Fig. 8.

As shown, process 800 can include generating and/or communicating, to a base station of a hosting operator network, a plurality of public land mobile network (PLMN) identifiers (IDs) comprising at least one PLMN ID of the hosting operator network and at least one PLMN ID of a participating operator network (block 810). Process 800 can include receiving and/or processing, from a user equipment (UE), information comprising the at least one PLMN ID of the participating operator network (block 820). Process 800 can include selecting and/or determining at least one core network function of the participating operator network based on the at least one PLMN ID of the participating operator network (block 830). One or more of the examples described herein can also, or alternatively be part of process 800.

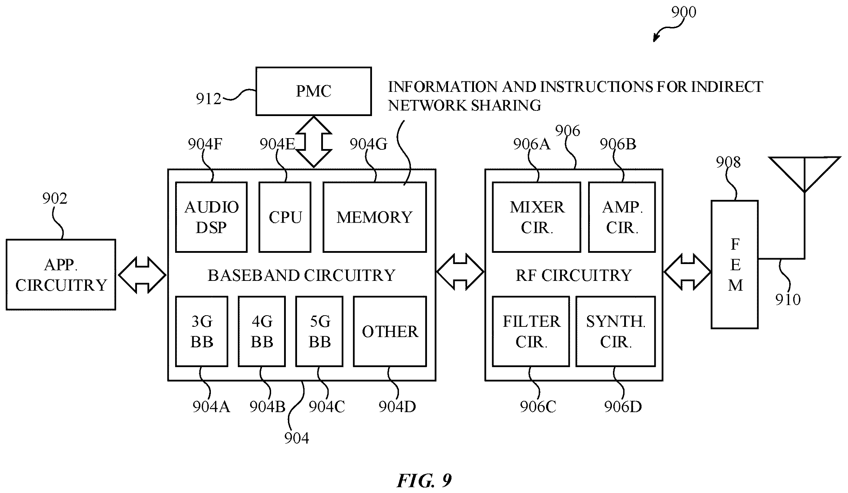

Fig. 9 is a diagram of an example of components of a device according to one or more implementations described herein. In some implementations, device 900 can include application circuitry 902, baseband circuitry 904, RF circuitry 906, front-end module (FEM) circuitry 908, one or more antennas 910, and power management circuitry (PMC) 912 coupled together at least as shown. In some implementations, device 900 can include fewer elements (e.g., a RAN node may not utilize application circuitry 902 and can instead include a processor/controller to process data received from a core network. In some implementations, device 900 can include additional elements such as, for example, memory/storage, display, camera, sensor (including one or more temperature sensors, such as a single temperature sensor, a plurality of temperature sensors at different locations in device 900, etc.), or input/output (I/O) interface. In other implementations, the components described below can be included in more than one device (e.g., said circuitries can be separately included in more than one device for cloud-RAN (C-RAN) implementations).

Application circuitry 902 can include one or more application processors. For example, application circuitry 902 can include circuitry such as, but not limited to, one or more single-core or multi-core processors. The processor(s) can include any combination of general-purpose processors and dedicated processors (e.g., graphics processors, application processors, etc.). The processors can be coupled with or can include memory/storage and can be configured to execute instructions stored in the memory/storage to enable various applications or operating systems to run on device 900. In some implementations, processors of application circuitry 902 can process data packets received from a core network.

Baseband circuitry 904 can include circuitry such as, but not limited to, one or more single-core or multi-core processors. Baseband circuitry 904 can include one or more baseband processors or control logic to process baseband signals received from a receive signal path of RF circuitry 906 and to generate baseband signals for a transmit signal path of RF circuitry 906. Baseband circuity 904 can interface with application circuitry 902 for generation and processing of the baseband signals and for controlling operations of RF circuitry 906. For example, in some implementations, baseband circuitry 904 can include a 3G baseband processor 904A, a 4G baseband processor 904B, a 5G baseband processor 904C, or other baseband processor(s) 904D for other existing generations, generations in development or to be developed in the future (e.g., 5G, 6G, 7G, etc.). Baseband circuitry 904 (e.g., one or more of baseband processors 904A-D) can handle various radio control functions that enable communication with one or more radio networks via RF circuitry 906. In other implementations, some or all of the functionality of baseband processors 904A-D can be included in modules stored in memory 904G and executed via a central processing unit (CPU) 904E. The radio control functions can include, but are not limited to, signal modulation/demodulation, encoding/decoding, radio frequency shifting, etc. In some implementations, modulation/demodulation circuitry of baseband circuitry 904 can include Fast-Fourier Transform (FFT), precoding, or constellation mapping/de-mapping functionality. In some implementations, encoding/decoding circuitry of baseband circuitry 904 can include convolution, tail-biting convolution, turbo, Viterbi, or low-density parity check (LDPC) encoder/decoder functionality. Implementations of modulation/demodulation and encoder/decoder functionality are not limited to these examples and can include other suitable functionality in other implementations.

In some implementations, memory 904G can receive and/or store information and instructions for indirect network sharing. UE 210 and/or baseband circuitry 904 can receive from base station 222 PLMN IDs corresponding to hosting operator network 410 and at least one participating operator networks 420. UE 210 can select a PLMN ID of participating operator network 420 and communicate with hosting operator network 410 to perform one or more procedures based on the PLMN ID of participating operator network 420. Examples of such procedures can include an authentication procedure, registration procedure, a protocol data unit (PDU) session establishment procedure, and more. AMF 310 of hosting operator network 420 can select one or more functions in hosting operator network 410 and participating operator network 420 to complete the procedures. These and many other features and examples are described herein.

In some implementations, baseband circuitry 904 can include one or more audio digital signal processor(s) (DSP) 904F. Audio DSP 904F can include elements for compression/decompression and echo cancellation and can include other suitable processing elements in other implementations. Components of baseband circuitry 904 can be suitably combined in a single chip, a single chipset, or disposed on a same circuit board in some implementations. In some implementations, some or all of the constituent components of baseband circuitry 904 and application circuitry 902 can be implemented together such as, for example, on a system on a chip (SOC).

In some implementations, baseband circuitry 904 can provide for communication compatible with one or more radio technologies. For example, in some implementations, baseband circuitry 904 can support communication with a NG-RAN, an evolved universal terrestrial radio access network (EUTRAN) or other wireless metropolitan area networks (WMAN), a wireless local area network (WLAN), a wireless personal area network (WPAN), etc. Implementations in which baseband circuitry 904 is configured to support radio communications of more than one wireless protocol can be referred to as multi-mode baseband circuitry.

RF circuitry 906 can enable communication with wireless networks using modulated electromagnetic radiation through a non-solid medium. In various implementations, RF circuitry 906 can include switches, filters, amplifiers, etc., to facilitate the communication with the wireless network. RF circuitry 906 can include a receive signal path which can include circuitry to down-convert RF signals received from FEM circuitry 908 and provide baseband signals to baseband circuitry 904. RF circuitry 906 can also include a transmit signal path which can include circuitry to up-convert baseband signals provided by baseband circuitry 904 and provide RF output signals to FEM circuitry 908 for transmission.

In some implementations, the receive signal path of RF circuitry 906 can include mixer circuitry 906A, amplifier circuitry 906B and filter circuitry 906C. In some implementations, the transmit signal path of RF circuitry 906 can include filter circuitry 906C and mixer circuitry 906A. RF circuitry 906 can also include synthesizer circuitry 906D for synthesizing a frequency for use by mixer circuitry 906A of the receive signal path and the transmit signal path. In some implementations, mixer circuitry 906A of the receive signal path can be configured to down-convert RF signals received from FEM circuitry 908 based on the synthesized frequency provided by synthesizer circuitry 906D. Amplifier circuitry 906B can be configured to amplify the down-converted signals and filter circuitry 906C can be a low-pass filter (LPF) or band-pass filter (BPF) configured to remove unwanted signals from the down-converted signals to generate output baseband signals. Output baseband signals can be provided to baseband circuitry 904 for further processing. In some implementations, the output baseband signals can be zero-frequency baseband signals, although this may not be a requirement. In some implementations, mixer circuitry 906A of the receive signal path can comprise passive mixers, although the scope of the implementations is not limited in this respect.

In some implementations, mixer circuitry 906A of the transmit signal path can be configured to up-convert input baseband signals based on the synthesized frequency provided by synthesizer circuitry 906D to generate RF output signals for FEM circuitry 908. The baseband signals can be provided by baseband circuitry 904 and can be filtered by filter circuitry 906C. In some implementations, mixer circuitry 906A of the receive signal path and mixer circuitry 906A of the transmit signal path can include two or more mixers and can be arranged for quadrature down conversion and up conversion, respectively. In some implementations, mixer circuitry 906A of the receive signal path and mixer circuitry 906A of the transmit signal path can include two or more mixers and can be arranged for image rejection. In some implementations, mixer circuitry 906A of the receive signal path and mixer circuitry 906A can be arranged for direct down conversion and direct up conversion, respectively. In some implementations, mixer circuitry 906 of the receive signal path and mixer circuitry 906A of the transmit signal path can be configured for super-heterodyne operation.

In some implementations, the output baseband signals, and the input baseband signals can be analog baseband signals, although the scope of the implementations is not limited in this respect. In some alternate implementations, the output baseband signals, and the input baseband signals can be digital baseband signals. In these alternate implementations, RF circuitry 906 can include analog-to-digital converter (ADC) and digital-to-analog converter (DAC) circuitry and baseband circuitry 904 can include a digital baseband interface to communicate with RF circuitry 906.

In some dual-mode implementations, a separate radio integrated circuitry can be provided for processing signals for each spectrum, although the scope of the implementations is not limited in this respect. In some implementations, synthesizer circuitry 906D can be a fractional-N synthesizer or a fractional N/N+1 synthesizer, although the scope of the implementations is not limited in this respect as other types of frequency synthesizers can be suitable. For example, synthesizer circuitry 906D can be a delta-sigma synthesizer, a frequency multiplier, or a synthesizer comprising a phase-locked loop with a frequency divider.

Synthesizer circuitry 906D can be configured to synthesize an output frequency for use by mixer circuitry 906A of RF circuitry 906 based on a frequency input and a divider control input. In some implementations, synthesizer circuitry 906D can be a fractional N/N+1 synthesizer. In some implementations, frequency input can be provided by a voltage-controlled oscillator (VCO). Divider control input can be provided by either baseband circuitry 904 or the applications circuitry 902 depending on the desired output frequency. In some implementations, a divider control input (e.g., N) can be determined from a look-up table based on a channel indicated by the applications circuitry 902.

Synthesizer circuitry 906D of RF circuitry 906 can include a divider, a delay-locked loop (DLL), a multiplexer, and a phase accumulator. In some implementations, the divider can be a dual modulus divider (DMD), and the phase accumulator can be a digital phase accumulator (DPA). In some implementations, the DMD can be configured to divide the input signal by either N or N+1 (e.g., based on a carry out) to provide a fractional division ratio. In some example implementations, the DLL can include a set of cascaded, tunable, delay elements, a phase detector, a charge pump and a D-type flip-flop. In these implementations, the delay elements can be configured to break a VCO period up into Nd equal packets of phase, where Nd is the number of delay elements in the delay line. In this way, the DLL provides negative feedback to help ensure that the total delay through the delay line is one VCO cycle.

In some implementations, synthesizer circuitry 906D can be configured to generate a carrier frequency as the output frequency, while in other implementations, the output frequency can be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some implementations, the output frequency can be a LO frequency (fLO). In some implementations, RF circuitry 906 can include an in-phase/quadrature (I/Q)/polar converter.

FEM circuitry 908 can include a receive signal path which can include circuitry configured to operate on RF signals received from one or more antennas 910, amplify the received signals and provide the amplified versions of the received signals to RF circuitry 906 for further processing. FEM circuitry 908 can also include a transmit signal path which can include circuitry configured to amplify signals for transmission provided by RF circuitry 906 for transmission by one or more of the one or more antennas 910. In various implementations, the amplification through the transmit or receive signal paths can be done solely in RF circuitry 906, solely in FEM circuitry 908, or in both RF circuitry 906 and FEM circuitry 908.

In some implementations, FEM circuitry 908 can include a transmit/receive switch to switch between transmit mode and receive mode operation. FEM circuitry 908 can include a receive signal path and a transmit signal path. The receive signal path of FEM circuitry 908 can include a low noise amplifier to amplify received RF signals and provide the amplified received RF signals as an output (e.g., to RF circuitry 906). The transmit signal path of FEM circuitry 908 can include a power amplifier to amplify input RF signals (e.g., provided by RF circuitry 906), and one or more filters to generate RF signals for subsequent transmission (e.g., by one or more of one or more antennas 910).

In some implementations, PMC 912 can manage power provided to baseband circuitry 904. In particular, PMC 912 can control power-source selection, voltage scaling, battery charging, or direct current (DC) to DC (DC-to-DC) conversion. PMC 912 can often be included when device 900 is capable of being powered by a battery, for example, when device 900 is included in a UE. PMC 912 can increase the power conversion efficiency while providing desirable implementation size and heat dissipation characteristics.

While Fig. 9 shows PMC 912 coupled only with baseband circuitry 904. However, in other implementations, PMC 912 can be additionally or alternatively coupled with, and perform similar power management operations for, other components such as, but not limited to, application circuitry 902, RF circuitry 906, or FEM circuitry 908.

In some implementations, PMC 912 can control, or otherwise be part of, various power saving mechanisms of device 900. For example, if device 900 is in an RRC_Connected state, where device 900 is still connected to the RAN node as device 900 expects to receive traffic shortly, then device 900 can enter a state known as discontinuous reception mode (DRX) after a period of inactivity. During this state, device 900 can power down for brief intervals of time and thus save power.

If there is no data traffic activity for an extended period of time, then device 900 can transition off to an RRC_Idle state, where device 900 disconnects from the network and does not perform operations such as channel quality feedback, handover, etc. Device 900 can go into a very low power state and device 900 can perform paging where again device 900 periodically can wake up to listen to the network and then power down again. Device 900 may not receive data in this state; in order to receive data, device 900 can transition back to RRC_Connected state.

An additional power saving mode can allow a device to be unavailable to the network for periods longer than a paging interval (ranging from seconds to a few hours). During this time, the device 900 can be unreachable to the network and can power down completely. Any data sent during this time can incur a large delay and device 900 can assume the delay is acceptable.

Processors of application circuitry 902 and processors of baseband circuitry 904 can be used to execute elements of one or more instances of a protocol stack. For example, processors of baseband circuitry 904, alone or in combination, can be used execute Layer 3, Layer 2, or Layer 1 functionality, while processors of baseband circuitry 904 can utilize data (e.g., packet data) received from these layers and further execute Layer 4 functionality (e.g., transmission communication protocol (TCP) and user datagram protocol (UDP) layers). As referred to herein, Layer 3 can comprise a radio resource control layer. As referred to herein, Layer 2 can comprise a medium access control layer, a radio link control layer, and a packet data convergence protocol layer, described in further detail below. As referred to herein, Layer 1 can comprise a physical layer of a UE/RAN node.

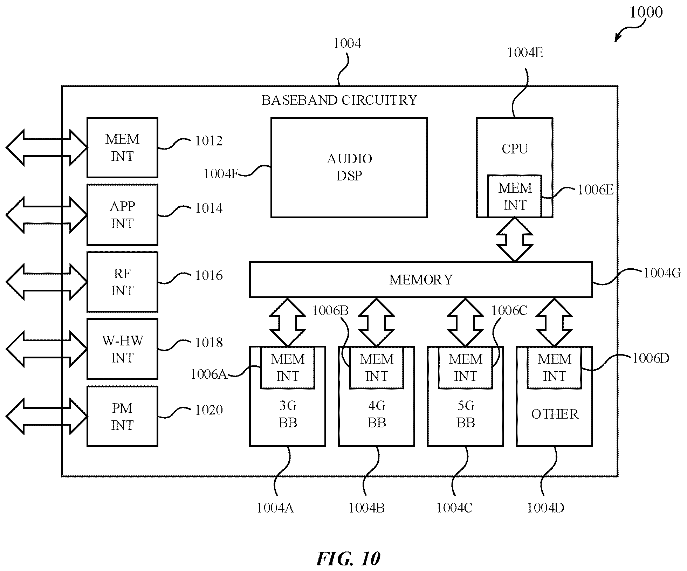

Fig. 10 is a diagram of example interfaces 1000 of baseband circuitry according to one or more implementations described herein. One or more components or features of example interfaces 1000 can correspond to one or more components or features described above or elsewhere. Baseband circuitry 1004 can comprise processors 1004A, 1004B, 1004C, 1004D, and 1004E and a memory 1004G utilized by said processors. Each of processors 1004A, 1004B, 1004C, 1004D, and 1004E can include a memory interface, 1006A, 1006B, 1006C, 1006D, and 1006E, respectively, to send/receive data to/from memory 1004G. Baseband circuitry can be a component of a UE and/or another type of device or system capable of transmitting and/or receiving wireless signals.

Baseband circuitry 1004 can further include one or more interfaces to communicatively couple to other circuitries/devices, such as memory interface 1012 (e.g., an interface to send/receive data to/from memory external to baseband circuitry 1004), an application circuitry interface 1014 (e.g., an interface to send/receive data to/from the application circuitry as described herein), an RF circuitry interface 1016, a wireless hardware connectivity interface 1018 (e.g., an interface to send/receive data to/from near field communication components, Bluetooth^{®} components (e.g., Bluetooth^{®} Low Energy), Wi-Fi^{®} components, and other communication components), and a power management interface 1020 (e.g., an interface to send/receive power or control signals to/from a PMC).

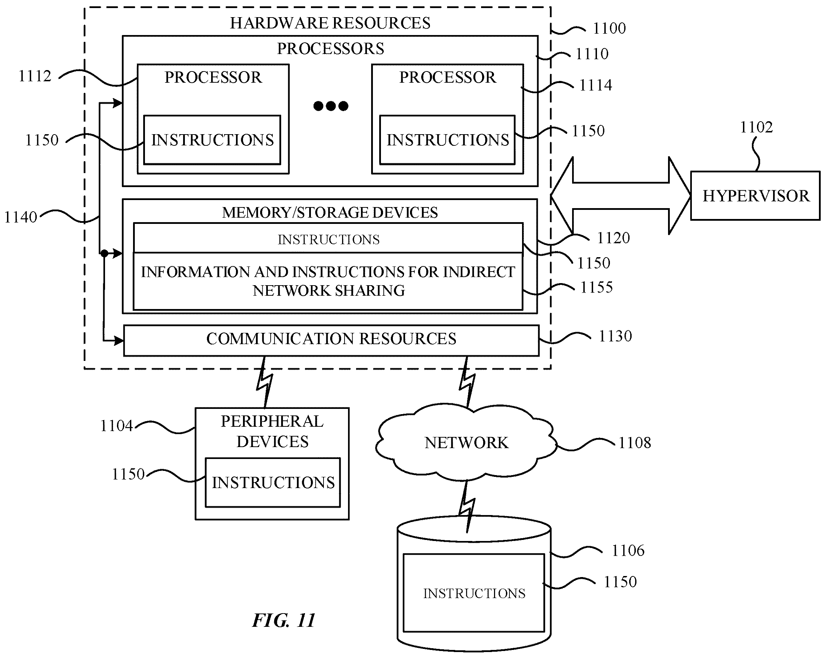

Fig. 11 is a block diagram illustrating components, according to some example implementations, able to read instructions from a machine-readable or computer-readable medium (e.g., a non-transitory machine-readable storage medium) and perform any one or more of the methodologies discussed herein. Specifically, Fig. 11 shows a diagrammatic representation of hardware resources 1100 including one or more processors 1110 (or processor cores), one or more memory/storage devices 1120, and one or more communication resources 1130, each of which can be communicatively coupled via a bus 1140. For implementations where node virtualization or network function virtualization is utilized, a hypervisor can be executed to provide an execution environment for one or more network slices/sub-slices to utilize hardware resources 1100. Hardware resources 1100 can interact with hypervisor 1102. For example, hypervisor 1102 can schedule or otherwise manage hardware resource 1100.

Processors 1110 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) can include, for example, a processor 1112 and a processor 1114.

Memory/storage devices 1120 can include main memory, disk storage, or any suitable combination thereof. Memory/storage devices 1120 can include, but are not limited to any type of volatile or non-volatile memory such as dynamic random-access memory (DRAM), static random-access memory (SRAM), erasable programmable read-only memory (EPROM), electrically erasable programmable read-only memory (EEPROM), flash memory, solid-state storage, etc.

In some implementations, memory/storage devices 1120 receive and/or store information and instructions 1155 for indirect network sharing. UE 210 can receive from base station 222 PLMN IDs corresponding to hosting operator network 410 and at least one participating operator networks 420. UE 210 can select a PLMN ID of participating operator network 420 and communicate with hosting operator network 410 to perform one or more procedures based on the PLMN ID of participating operator network 420. Examples of such procedures can include an authentication procedure, registration procedure, a protocol data unit (PDU) session establishment procedure, and more. AMF 310 of hosting operator network 420 can select one or more functions in hosting operator network 410 and participating operator network 420 to complete the procedures. These and many other features and examples are described herein.

Communication resources 1130 can include interconnection or network interface components or other suitable devices to communicate with one or more peripheral devices 1104 or one or more databases 1106 via a network 1108. For example, communication resources 1130 can include wired communication components (e.g., for coupling via a universal serial bus), cellular communication components, near field communication components, Bluetooth^{®} components (e.g., Bluetooth^{®} Low Energy), Wi-Fi^{®} components, and other communication components.

Instructions 1150A, 1150B, 1150C, 1150D, and/or 1150E can comprise software, a program, an application, an applet, an app, or other executable code for causing at least any of processors 1110 to perform any one or more of the methodologies discussed herein. Instructions 1150 can reside, completely or partially, within at least one of processors 1110 (e.g., within a cache memory), memory/storage devices 1120, or any suitable combination thereof. Furthermore, any portion of instructions 1150A-E can be transferred to hardware resources 1100 from any combination of peripheral devices 1104 or databases 1106. Accordingly, memory of processors 1110, memory/storage devices 1120, peripheral devices 1104, and databases 1106 are examples of computer-readable and machine-readable media.

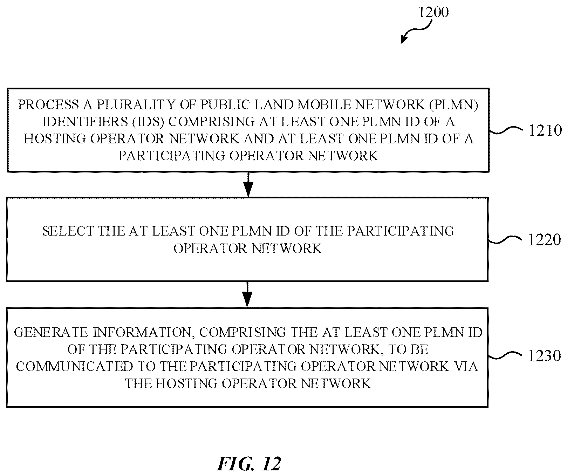

Fig. 12 is a diagram of an example process 1200 for real-time precise ionosphere corrections according to one or more implementations described herein. As shown, process 1200 can be implemented by UE 210, baseband circuitry 904, and/or one or more other components of UE 210. In some implementations, some or all of process 1200 can be performed by one or more other systems or devices, including one or more of the devices of Fig. 2. Additionally, process 1200 can include one or more fewer, additional, differently ordered and/or arranged operations than those shown in Fig. 12. In some implementations, some or all of the operations of process 1200 can be performed independently, successively, simultaneously, etc., of one or more of the other operations of process 1200. As such, the techniques described herein are not limited to the number, sequence, arrangement, timing, etc., of the operations or processes depicted in Fig. 12.

As shown, process 1200 can include receiving and/or processing a plurality of public land mobile network (PLMN) identifiers (IDs) comprising at least one PLMN ID of a hosting operator network and at least one PLMN ID of a participating operator network (block 1210). Process 1200 can include selecting and/or determining at least one PLMN ID of the participating operator network (block 1220). Process 1200 can include generating and/or communicating information, comprising the at least one PLMN ID of the participating operator network, to be communicated to the participating operator network via the hosting operator network (block 1230). One or more of the examples described herein can also, or alternatively be part of process 1200.

Examples herein can include subject matter such as a method, means for performing acts or blocks of the method, at least one machine-readable medium including executable instructions that, when performed by a machine (e.g., a processor (e.g., processor, etc.) with memory, an application-specific integrated circuit (ASIC), a field programmable gate array (FPGA), or the like) cause the machine to perform acts of the method or of an apparatus or system for concurrent communication using multiple communication technologies according to implementations and examples described.

In example 1, which can also include one or more of the examples described herein, baseband circuitry can comprise one or more processors configured to: process a plurality of public land mobile network (PLMN) identifiers (IDs) comprising at least one PLMN ID of a hosting operator network and at least one PLMN ID of a participating operator network; select the at least one PLMN ID of the participating operator network; and generate information, comprising the at least one PLMN ID of the participating operator network, to be communicated to the participating operator network via the hosting operator network.

In example 2, which can also include one or more of the examples described herein, the at least one PLMN ID of the hosting operator network comprises a visiting PLMN (VPLMN) ID, and the at least one PLMN ID of the participating operator network comprises a home PLMN (HPLMN) ID.

In example 3, which can also include one or more of the examples described herein, the HPLMN ID is derived from a subscription permanent identifier (SUPI) associated with the participating operator network.

In example 4, which can also include one or more of the examples described herein, the one or more processors are further configured to: use a serving network identifier (SN ID) of the participating operator network to derive keys for authentication with the participating operator network.

In example 5, which can also include one or more of the examples described herein, the at least one PLMN ID of the participating operator network is selected based on a subscription for service associated with the participating operator network.

In example 6, which can also include one or more of the examples described herein, the information comprises a registration request, and the one or more processors are further configured to: receive, in response to the registration request, a registration response from the hosting operator network.

In example 7, which can also include one or more of the examples described herein, the registration request is communicated to a radio access network (RAN) of the hosting operator network.

In example 8, which can also include one or more of the examples described herein, the one or more processors are further configured to: determine a single network slice selection assistance information (S-NSSAI) of the participating operator network, the information comprises the S-NSSAI of the participating operator network, and the S-NSSAI of the participating operator network is associated with an S-NSSAI of the hosting operator network.

In example 9, which can also include one or more of the examples described herein, the at least one PLMN ID of the participating operator network and the S-NSSAI are used in a registration procedure.

In example 10, which can also include one or more of the examples described herein, the at least one PLMN ID of the participating operator network and the S-NSSAI are used in a protocol data unit (PDU) session establishment procedure.

In example 11, which can also include one or more of the examples described herein, the plurality of PLMNs further comprises at least one equivalent PLMN ID of the at least one PLMN ID of the participating operator network.

In example 12, which can also include one or more of the examples described herein, a server device, configured to operate as an access and mobility management function (AMF), can comprise: one or more processors configured to: provide, to a base station of a hosting operator network, a plurality of public land mobile network (PLMN) identifiers (IDs) comprising at least one PLMN ID of the hosting operator network and at least one PLMN ID of a participating operator network; receive, from a user equipment (UE), information comprising the at least one PLMN ID of the participating operator network; and select at least one core network function of the participating operator network based on the at least one PLMN ID of the participating operator network.

In example 13, which can also include one or more of the examples described herein, the AMF comprises a serving AMF of the hosting operator network, the base station comprises a shared radio access network for the hosting operator network and the participating operator network, and the serving AMF communicates with an AMF of the participating operator network and a user plane function (UPF) of the hosting operator network communicates with a UPF in the participating operator network.

In example 14, which can also include one or more of the examples described herein, the one or more processors are further configured to: determine, based at least in part on the at least one PLMN ID of a participating operator network, that the UE is registered with the participating operator network as part of a registration procedure.

In example 15, which can also include one or more of the examples described herein, the one or more processors are further configured to: select, based at least in part on the at least one PLMN ID of a participating operator network, a session management function (SMF) of the participating operator network and a visiting SMF (V-SMF) of the hosting operator network as part of a protocol data unit (PDU) session establishment procedure for the UE.

In example 16, which can also include one or more of the examples described herein, the at least one PLMN ID of the hosting operator network comprises a visiting PLMN (VPLMN) ID, and the at least one PLMN ID of the participating operator network comprises a home PLMN (HPLMN) ID.

In example 17, which can also include one or more of the examples described herein, the one or more processors are further configured to: use a serving network identifier (SN ID) that is based on the at least one PLMN ID of the participating operator network to perform an authentication procedure associated with the UE, the authentication procedure comprising a derivation of keys based on the SN ID.
In example 18, which can also include one or more of the examples described herein, the one or more processors are further configured to: receive, from the UE, a single network slice selection assistance information (S-NSSAI) of the participating operator network; and determine that the S-NSSAI of the participating operator network corresponds to an S-NSSAI of the hosting operator network based on a configuration agreement between the hosting operator network and the participating operator network.

In example 19, which can also include one or more of the examples described herein, the at least one PLMN ID of the participating operator network comprises an equivalent PLMN identifier (EPLMN ID).

In example 20, which can also include one or more of the examples described herein, a method, performed by a user equipment (UE), the method comprising: receiving, from a base station of a hosting operator network, a plurality of public land mobile network (PLMN) identifiers (IDs) comprising at least one PLMN ID of the hosting operator network and at least one PLMN ID of a participating operator network; selecting the at least one PLMN ID of the participating operator network; and communicating, to a base station of the hosting operator network, information comprising the at least one PLMN ID of the participating operator network.

The above description of illustrated examples, implementations, aspects, etc., of the subject disclosure, including what is described in the Abstract, is not intended to be exhaustive or to limit the disclosed aspects to the precise forms disclosed. While specific examples, implementations, aspects, etc., are described herein for illustrative purposes, various modifications are possible that are considered within the scope of such examples, implementations, aspects, etc., as those skilled in the relevant art can recognize.

In this regard, while the disclosed subject matter has been described in connection with various examples, implementations, aspects, etc., and corresponding Figures, where applicable, it is to be understood that other similar aspects can be used or modifications and additions can be made to the disclosed subject matter for performing the same, similar, alternative, or substitute function of the subject matter without deviating therefrom. Therefore, the disclosed subject matter should not be limited to any single example, implementation, or aspect described herein, but rather should be construed in breadth and scope in accordance with the appended claims below.

In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations. In addition, while a particular feature can have been disclosed with respect to only one of several implementations, such feature can be combined with one or more other features of the other implementations as can be desired and advantageous for any given application.

As used herein, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description or the claims, such terms are intended to be inclusive in a manner similar to the term "comprising." Additionally, in situations wherein one or more numbered items are discussed (e.g., a "first X", a "second X", etc.), in general the one or more numbered items can be distinct, or they can be the same, although in some situations the context can indicate that they are distinct or that they are the same.

It is well understood that the use of personally identifiable information should follow privacy policies and practices that are generally recognized as meeting or exceeding industry or governmental requirements for maintaining the privacy of users. In particular, personally identifiable information data should be managed and handled to minimize risks of unintentional or unauthorized access or use, and the nature of authorized use should be clearly indicated to users.

## Claims

1. Baseband circuitry, comprising:
one or more processors configured to:
process a plurality of public land mobile network (PLMN) identifiers (IDs) comprising at least one PLMN ID of a hosting operator network and at least one PLMN ID of a participating operator network;
select at least one PLMN ID of the participating operator network; and
generate information, comprising the at least one PLMN ID of the participating operator network, to be communicated to the participating operator network via the hosting operator network.

2. The baseband circuity of claim 1, wherein:
the at least one PLMN ID of the hosting operator network comprises a visiting PLMN (VPLMN) ID, and
the at least one PLMN ID of the participating operator network comprises a home PLMN (HPLMN) ID.

3. The baseband circuity of claim 2, wherein the HPLMN ID is derived from a subscription permanent identifier (SUPI) associated with the participating operator network.

4. The baseband circuity of claim 1, wherein the one or more processors are further configured to:
use a serving network identifier (SN ID) of the participating operator network to derive keys for authentication with the participating operator network.

5. The baseband circuity of claim 1, wherein the at least one PLMN ID of the participating operator network is selected based on a subscription for service associated with the participating operator network.

6. The baseband circuity of claim 1, wherein:
the information comprises a registration request, and
the one or more processors are further configured to:
receive, in response to the registration request, a registration response from the hosting operator network.

7. The baseband circuity of claim 6, wherein the registration request is communicated to a radio access network (RAN) of the hosting operator network.

8. The baseband circuity of claim 1, wherein:
the one or more processors are further configured to:
determine a single network slice selection assistance information (S-NSSAI) of the participating operator network,
the information comprises the S-NSSAI of the participating operator network, and
the S-NSSAI of the participating operator network is associated with an S-NSSAI of the hosting operator network.

9. The baseband circuity of claim 8, wherein the at least one PLMN ID of the participating operator network and the S-NSSAI are used in a registration procedure.

10. The baseband circuity of claim 8, wherein the at least one PLMN ID of the participating operator network and the S-NSSAI are used in a protocol data unit (PDU) session establishment procedure.

11. The baseband circuity of claim 1, wherein the plurality of PLMNs further comprises at least one equivalent PLMN ID of the at least one PLMN ID of the participating operator network.

12. A method, performed by a user equipment (UE), the method comprising:
receiving, from a base station of a hosting operator network, a plurality of public land mobile network (PLMN) identifiers (IDs) comprising at least one PLMN ID of the hosting operator network and at least one PLMN ID of a participating operator network;
selecting the at least one PLMN ID of the participating operator network; and
communicating, to a base station of the hosting operator network, information comprising the at least one PLMN ID of the participating operator network.

13. The method of claim 12, wherein:
the at least one PLMN ID of the hosting operator network comprises a visiting PLMN (VPLMN) ID, and
the at least one PLMN ID of the participating operator network comprises a home PLMN (HPLMN) ID.

14. The method of claim 13, wherein the HPLMN ID is derived from a subscription permanent identifier (SUPI) associated with the participating operator network.

15. The method of claim 12, further comprising:
using a serving network identifier (SN ID) of the participating operator network to derive keys for authentication with the participating operator network.
